(19) Europäisches Patentamt
European Patent Office
Office européen des brevets

(11) EP 2 642 311 B1

(12) **EUROPEAN PATENT SPECIFICATION**

(45) Date of publication and mention
of the grant of the patent:
**25.10.2017 Bulletin 2017/43**

(51) Int Cl.:
***G01S 5/02*** *(2010.01)*   ***G01S 5/06*** *(2006.01)*

(21) Application number: **12160631.3**

(22) Date of filing: **21.03.2012**

(54) **Method and apparatus for improving measurement precision in the area of travelling time differences of signals**

Verfahren und Vorrichtung zur Verbesserung der Messpräzision in einem Bereich mit Übertragungszeitabweichungen von Signalen

Procédé et appareil pour améliorer la précision des mesures dans la zone des différences de temps de déplacement de signaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.09.2013 Bulletin 2013/39**

(73) Proprietor: **Saab Medav Technologies GmbH 91080 Uttenreuth (DE)**

(72) Inventors:
• **Kleschenkow, Alex 90425 Nürnberg (DE)**
• **Warzügel, Steffen 90562 Heroldsberg (DE)**
• **Kolb, Dirk 91054 Erlangen (DE)**

(74) Representative: **Benedum, Ulrich Max et al Nebens IP Patente Marken Designs Oberföhringer Strasse 172 81925 München (DE)**

(56) References cited:
US-A- 5 327 144      US-A- 5 512 908
US-A1- 2008 089 393      US-A1- 2008 167 051

**Description**

TECHNICAL FIELD

The invention relates to measuring the travelling time differences of a signal travelling over channels with different time delays, in particular for location determination of radio emitters.

TECHNICAL BACKGROUND

In recent years there has been an increasing demand for locating the emitters of radio frequency (RF) transmissions. Civil and military authorities wish to find the unknown locations of emitters of radio frequency, for example "radio hams" communicating in forbidden frequency bands or with a transmission power exceeding given thresholds, criminals that communicate with cellular phones or radiotelephones, emergency calls of persons using a cellular phone or transmitters of spies or hostile forces.

There are known some methods for locating emitters of radio frequency, for example Angle-Of-Arrival (AOA), Time-Of-Arrival (TOA) and Time-Difference-Of-Arrival (TDOA), every method having benefits and drawbacks. For locating unknown and non-cooperating emitters, TOA cannot be used, because there is a need for an extremely precise synchronisation of clocks in the emitters and receivers.

Examples of such methods for TDOA location determination of narrowband emitters are disclosed by Stilp et al in US 6,388,618 and references cited therein. The disclosures refer to a signal collection system that is used in a wireless location system for determining the geographical locations of mobile wireless transmitters.

AOA uses the direction of arrival of the received signals. For locating there are needed at least two receiving stations with multiple antennas. Based on the direction of arrival of the received signals and the known positions of the receivers the unknown position of the emitter is calculated by triangulation. TDOA needs at least three receiving stations with known positions and synchronised clocks in the receivers. Based on the time differences of a single signal that is transmitted by the emitter and received at different times at the corresponding receivers, the unknown position of the emitter can be computed.

Regarding TDOA and AOA, the ITU-R Report SM.2211 (06/2011), "Comparison of Time-Difference-of-Arrival and Angle-of Arrival Methods of Signal Geolocations" summarizes the state of the art and sets forth corresponding advantages and shortcomings.

In short, the main TDOA-versus-AOA strengths are simpler antenna requirements, simpler situating and calibration requirements and good performance for wideband, low-SNR signals and short duration signals. The TDOA techniques in the field of narrowband signals have low accuracy because travelling time differences of narrowband signal cannot be measured precisely. The main TDOA-versus-AOA weakness is dealing with narrowband signals. Slowly varying signals, which include unmodulated carriers and narrowband signals may be impossible or difficult to locate with TDOA techniques. Presently a bandwidth of about 30 kHz is the minimum signal bandwidth for acceptable performance of TDOA-methods, if there are suitable conditions. The prior art therefore represents a technical problem.

US 5512908 A discloses a method for determining the TDOA of signals from a cellular telephone, which includes determining TDOAs for a plurality of channels, averaging the TDOAs from the channels, subtracting the average TDOA from the individual channel TDOAs to determine residual channel TDOAs and determining an overall residual TDOA from the residual channel TDOAs.

US 5327144 A discloses a cellular telephone location system for automatically recording the location of one or more mobile cellular telephones comprises three or more cell site systems . Each cell site system is located at a cell site of a cellular telephone system and includes an antenna mounted on the same tower or building as the antenna. The cell site systems are coupled to a central site having a database which is accessible by subscribers.

US 2008/089393 A1 discloses a method for positioning a mobile signal transmitter. The distance between the transmitter and multiple sensors is determined based on a direct sequence spread spectrum signal. A transmitter delay of the signal is estimated each sensor cross-correlating an over-sampled representation of the signal with an appropriate local spreading sequence, which contains poly-phased symbol values which are different from the symbols used in the direct sequence to spread the transmitted signal.

US 2008/167051 A1 discloses a method of determining the location of a target device among neighboring base stations. A set of neighboring base stations are initialized to determine their location relative to each other. The target device measures the time of arrival of signals sent be the different base stations. Using a TDOA method, the location of the target device relative to the base stations is calculated.

SUMMARY OF THE INVENTION

The present disclosure relates to a method for measuring the travelling time differences of a narrowband signal in a bandwidth range below 30kHz that is transmitted from one stationary emitter over at least two channels having different time delays to at least two stationary receivers. The method requires the sampling of the signals arriving at the at least two receivers; the correlation of the segments of the sampled signals of each two receivers to obtain the cross-correlation functions of each two signals; and the extraction of the maximum values of the cross-correlation functions that represent the travelling time differences of the corresponding signals. The disclosure encompasses a step of sampling the signals arriving at the at least two receivers which comprises a first step of sampling the signals according to the sampling theorem, and a second step of interpolating the sampled values of the first step by a number of interpolation values; and the step of correlating segments of the sampled signals of each two receivers comprises correlating segments of the signals interpolated by the number of interpolation values; and the step of extracting the maximum values of the cross-correlation functions comprises a first step of fitting continuous smooth curves to the maximum values and two or more neighbouring values of the cross-correlation functions, the continuous smooth curves spanning the distances between these values, and a second step of calculating the maximums of the continuous smooth curves and taking these maximums as the maximum values of the cross-correlation functions.

The method for measuring the travelling time differences in the present disclosure may also perform the interpolation of the time dependent signals received at the receivers using a Farrow filter.

The method for measuring the travelling time differences in the present disclosure may also use a continuous smooth curve wherein the continuous smooth curve is a parabolic curve.

The method for measuring the travelling time differences in the present disclosure also relates to a method for measuring the travelling time differences of a narrowband signal in a bandwidth range below 30kHz that is transmitted from one emitter that may be a moving emitter over at least two channels having different delays. The channels could be disturbed by multipath transmissions and reflections from stationary or moving reflectors, to at least two receivers that may be moving receivers. The method has the steps of: sampling the signals arriving at the at least two receivers; correlating segments of the sampled signals of each two receivers to obtain the cross-correlation functions of each two signals; removing the effects of movements and disturbed channels from the cross-correlation functions; and extracting the maximum values of the cross-correlation functions that represent the travelling time differences of the corresponding signals. The step of sampling the signals arriving at the at least two receivers comprises a first step of sampling the signals according to the sampling theorem, and a second step of interpolating the sampled values of the first step by a number of interpolation values. The step of correlating segments of the sampled signals of each two receivers could comprise: a first step of dividing the sampled and interpolated segments of signals of each two receivers into the same number of smaller pieces of equal size, a second step of correlating corresponding small pieces to obtain cross-correlation functions of each two corresponding signal pieces, a third step of ordering the cross-correlation functions of the corresponding pieces in a sequence one behind the other in a two-dimensional plane, and a fourth step of computing a one-dimensional FFT in the ordering direction of the cross-correlation functions for every value of the cross-correlation functions in the two-dimensional plane; the step of removing the effects of movements and disturbed channels from the cross-correlation functions comprises a step of selecting the peak line with the strongest magnitude from the FFT in the two-dimensional plane and using this peak line as a cross-correlation function for further processing; and the step of extracting the maximum values of the cross-correlation functions further comprises: a first step of fitting continuous smooth curves to the maximum values and two or more neighbouring values of the cross-correlation functions, the continuous smooth curves spanning the distances between these values, and a second step of calculating the maximums of the continuous smooth curves and taking these maximums as the maximum values of the cross-correlation functions.

In the method described above, at least the step of correlating the signal segments and the step of extracting the maximum values of the cross-correlation functions could be performed remotely from the at least two receivers.

In the method described above, the step of sampling the signals could include synchronizing the signal samples with a GPS-derived timing reference.

There is also described an apparatus for measuring the travelling time differences of a narrowband signal in a bandwidth range below 30kHz that is transmitted from one stationary emitter over at least two channels having different delays to at least two stationary receivers. The apparatus comprises a means configured to sample the signals arriving at the at least two receivers; a means configured to correlate segments of the sampled signals of each two receivers to obtain the cross-correlation functions of each two signals; and a means configured to extract the maximum values of the cross-correlation functions that represent the travelling time differences of the corresponding signals. The apparatus further comprises means configured to sample the signals arriving at the at least two receivers samples the signals according to the sampling theorem and interpolates the sampled values by a number of interpolation values; the means configured to correlate segments of the sampled signals of each two receivers correlates the segments of signals interpolated by the number of interpolation values to obtain cross-correlation functions; and the means configured to extract the maximum values of the cross-correlation functions fits continuous smooth curves to the maximum values and two or more neighbouring values of the cross-correlation functions, the continuous smooth curves spanning the distances between these values, and calculates the maximums of the continuous smooth curves and takes these maximums as the maximum values of the cross-correlation functions.

The apparatus could additionally comprise means configured to correlate the signal segments and means configured to extract the maximum values of the cross-correlation functions from the at least two receivers are located remotely from the two receivers.

The apparatus could additionally comprise means configured to synchronize the signal samples with a GPS-derived timing reference.

For measuring the travelling time differences of a single signal that travels on two or more channels with different delays and different distortions, two or more versions of the same signal having varying time differences are captured at corresponding measuring devices called sensors or receivers. An example is the signal of one RF-emitter received at two or more receiving stations having different distances to the emitter. The received analog signals are sampled with a frequency according to the sampling theorem. The sampled signals are cross-correlated to find the maximum values of the cross-correlation functions, which represent the travelling time differences of the received signals.

The main problem arising with this technique in the area of narrowband signals is the time difference between two samples in the received signals, which depends on the sampling frequency of the analog signals according to the bandwidth of the sampled signal. This time difference between two samples directly influences the achievable resolution of the values of the cross-correlation function that is the precision of the calculated value of the time difference between the two or more signals. This problem will now be explained in more detail for two signals with different bandwidths and therefore different sampling frequencies.

For example (example 1), let there be a first signal (also called a broadband signal) with a bandwidth of 1 MHz and a sampling rate of 1.25 MHz that is received at the two or more receiving stations with different delays. Sampling this signal with the sampling rate given above leads to a time difference between two samples of $1/1.25$ MHz = 0.8 $\mu$s. Correlating two sampled signals having a time difference of 0.8 $\mu$s between the sampled values results in a discrete cross-correlation function having values every 0.8 $\mu$s. If the inaccuracy of the maximum value of the cross-correlation function is roughly estimated with about $\pm 0.4$ $\mu$s, this is equal to an inaccuracy of the travelling distance of the RF-wave of $\pm 120$ meters. In many cases this may be an acceptable result for locating the emitter of an RF-wave.

Again for example (example 2), let there be a second signal (also called narrowband signal) with a bandwidth of 20 kHz and a sampling rate of 25 kHz that is received at the two or more receiving stations with different delays. Sampling this signals with the sampling rate given above leads to a time difference between two samples of $1/25$ kHz = 40 $\mu$s. Correlating two sampled signals having a time difference of 40 $\mu$s between the sampled values results in a discrete cross-correlation function having values every 40 $\mu$s. If the inaccuracy of the maximum value of the cross-correlation function is roughly estimated with about $\pm 20$ $\mu$s, this is equal to a travelling distance of the RF-wave of $\pm 6$ km. In most cases this will be an unacceptable result for locating the emitter of an RF-wave.

As seen from the above, processing narrowband signals for measuring the location of an emitter with prior TDOA-methods leads to unacceptably coarse resolutions for the time differences that is locating results for the emitter. Therefore, what is needed is a method to improve the accuracy of measuring the time difference of narrowband signals, or in other words to improve the resolution of the values of the discrete cross-correlation function that can be obtained.

Returning to the above narrowband signal (example 2), an interpolation with a factor of 10 leads to a time difference of 4 $\mu$s between the interpolated values of the signals that have to be cross-correlated. This means that the resolution of the cross-correlation function is also improved by the factor of 10. The maximum value of the cross-correlation function - that is to say the time difference between the two signals - can thus be calculated with much higher precision. The inaccuracy of the maximum value of the cross-correlation function is also improved in the order of about 10. Interpolating the sampled time signals thus leads to a significant improvement of the detection accuracy.

However, a further improvement of the accuracy of the obtained maximum value of the cross-correlation function is possible.

In the above description it is implicitly assumed that the scenario is stationary. That means that neither the emitter nor the receivers are moving during measurement. Further, it is assumed that there is a line-of-sight connection between the emitter and the receivers and that transmission channels are undisturbed. This means it is assumed that there is no multipath and no reflection effects by stationary or moving reflectors. Removing these assumptions to better adapt to real world scenarios, it has been found that the effects of movement, multipath transmissions and reflections in the transmission channels lead to a broader maximum in the cross-correlation function, and correctly extracting the maximum value is becomes increasingly difficult or sometimes impossible.

Combining the steps of the invention set forth above allows the use of TDOA-methods for locating the emitters of narrowband signals in the bandwidth range below 30 kHz with satisfying results, say with an accuracy of less than 10 to 20 meters. This has not been possible so far.

Therefore, the present disclosure further relates to a new algorithm for correcting the disturbances caused by movement and the effects of multipath transmission and reflections, which allows these effects to be separated from the original cross-correlation function. Thus, undisturbed values of the cross-correlation function can be used for further signal processing. This allows using the method of the invention in mobile and disturbed real world scenarios with satisfactory results, say for locating a narrowband emitter with sufficient preciseness to allow authorities to take action against individuals.

The present invention is best understood when read in conjunction with the accompanying figures, which serve to illustrate preferred embodiments. It is understood, however, that the invention is not limited to the embodiments disclosed in the figures.

BRIEF DESCRIPTION OF THE DRAWINGS

In the accompanying set of drawings:

Fig. 1    is a schematic of a target and several sensors showing the principles of a two-dimensional TDOA location system;

Fig. 2    is a plot of normalized amplitude against time delay with a signal bandwidth of 20 kHz and an oversampling factor of 1.25;

Fig. 3    is a plot of normalized amplitude against time delay showing a correlation result with interpolation in the time domain. The interpolation factor is 10, the signal bandwidth is 20 kHz and the oversampling factor is 1.25;

Fig. 4    is a plot of showing an increase in precision of the estimate of interpolation in the time domain and the correlation level.

Fig. 5    is a schematic layout of four sensors and a known target location after 300 correlation results without interpolation in the time domain. The signal bandwidth is 20 kHz; 300 measurements were made with a time difference of 0.2 seconds between each measurement, and an oversampling factor of 1.25 was used;

Fig. 6    is a schematic layout of four sensors and a known target location after 300 correlation results with interpolation in the time domain. The signal bandwidth is 20 kHz; 300 measurements were made with a time difference of 0.2 seconds between each measurement, and an oversampling factor of 1.25 was used;

Fig. 7    is a schematic layout of four sensors and a known target location after 300 correlation results with interpolation in the time domain and the correlation plane. The signal bandwidth is 20 kHz; 300 measurements were made with a time difference of 0.2 seconds between each measurement, and an oversampling factor of 1.25 was used;

Fig. 8    is a three dimensional plot comparing the Doppler spread (Hz), delay (us), and normalized amplitude of a cross-correlation function for a scenario with no movement and no Doppler shift. The signal bandwidth is 7.8125 kHz and the oversampling factor is 1.25:

Fig. 9    is a further three dimensional plot comparing the Doppler spread (Hz), delay (us), and normalized amplitude of a cross-correlation function for a scenario with Doppler shift and multipath. The signal bandwidth is 7.8125 kHz and the oversampling factor is 1.25.

DETAILED DESCRIPTION OF THE INVENTION

Exemplary embodiments of the invention will now be described with reference to the accompanying drawings. Though the invention is described in terms of TDOA-measurements for locating the emitters of RF-signals and in particular narrowband RF-signals, persons with skill in the art know that the method of the invention is not limited thereto. The invention is applicable to all kinds of problems that have a need for measuring the travelling time differences of signals, particularly narrowband signals. Some examples are radar measurements, synchronisation of tuners and comparison of patterns.

It is easier to understand the main principles of the invention if in a first stage of the description it is assumed that the emitter and the receivers are stationary, in other words that the emitter and the receivers do not move. Further, it is assumed that there is a line-of-sight connection between the emitter and the receivers and that transmission channels are undisturbed, will say that there are no multipath and reflection effects.

EMBODIMENT 1

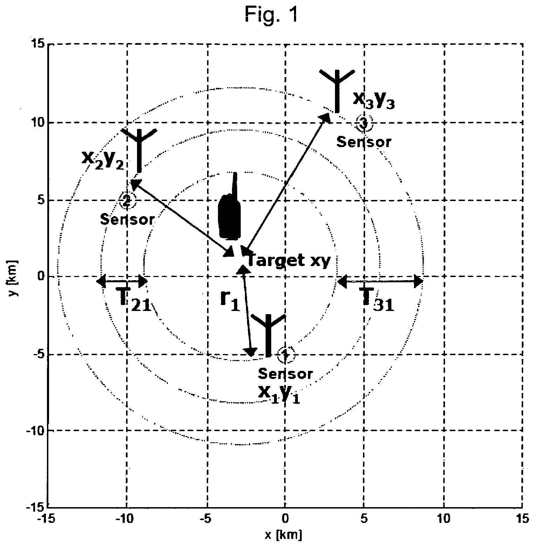

In a first embodiment of the invention Fig. 1 shows a scenario for explaining the principles of TDOA-location and the problems arising from there that will now be described in some detail. For ease of explanation, there is shown a two-dimensional scenario in a xy-plane, see Fig. 1. In the drawing there is a target (emitter of an RF-wave) with unknown coordinate values (x, y) and three sensors (receivers of the RF-wave) 1 - 3 with known coordinate values $(x_1, y_1)$, $(x_2, y_2)$ and $(x_3, y_3)$. Measuring the travelling time difference $T_{21}$ of the electromagnetic wave between sensor 2 and sensor 1 and the travelling time difference $T_{31}$ of the electromagnetic wave between sensor 3 and sensor 1 and converting these measured values by the speed of light to corresponding distances in space $m_{21}$ and $m_{31}$, respectively, the distance between the inner circle and the intermediate circle ($m_{21}$) and the distance between the inner circle and the outer circle ($m_{31}$) is known. Together with the unknown radius $r_1$ of the inner circle, the following equations are obtained:

$$(x - x_1)^2 + (y - y_1)^2 = r_1{}^2$$

$$(x - x_2)^2 + (y - y_2)^2 = (r_1 + m_{21})^2$$

$$(x - x_3)^2 + (y - y_3)^2 = (r_1 + m_{31})^2$$

By solving the above equations for the unknown variables x, y and $r_1$, the location of the target can be found. For dealing with scenarios in three-dimensional space a third coordinate z in a direction orthogonal to the xy-plane shown in Fig. 1 has to be introduced. Because of the new unknown variable z (the target now having unknown coordinate values x, y, z in the three-dimensional space), a fourth sensor is needed giving another (fourth) equation for the measured travelling time difference between the first and the fourth sensor (that corresponds to a distance in space $m_{41}$). Further, on the left sides of the four equations a term $(z - z_k)^2$, k = 1 - 4, describing the z-coordinate has to be added. By solving the resulting four equations

$$(x - x_1)^2 + (y - y_1)^2 + (z - z_1)^2 = r_1{}^2$$

$$(x - x_2)^2 + (y - y_2)^2 + (z - z_2)^2 = (r_1 + m_{21})^2$$

$$(x - x_3)^2 + (y - y_3)^2 + (z - z_3)^2 = (r_1 + m_{31})^2$$

$$(x - x_4)^2 + (y - y_4)^2 + (z - z_4)^2 = (r_1 + m_{41})^2$$

for the unknown variables x, y, z and $r_1$, the position of the target in three-dimensional space can be found.

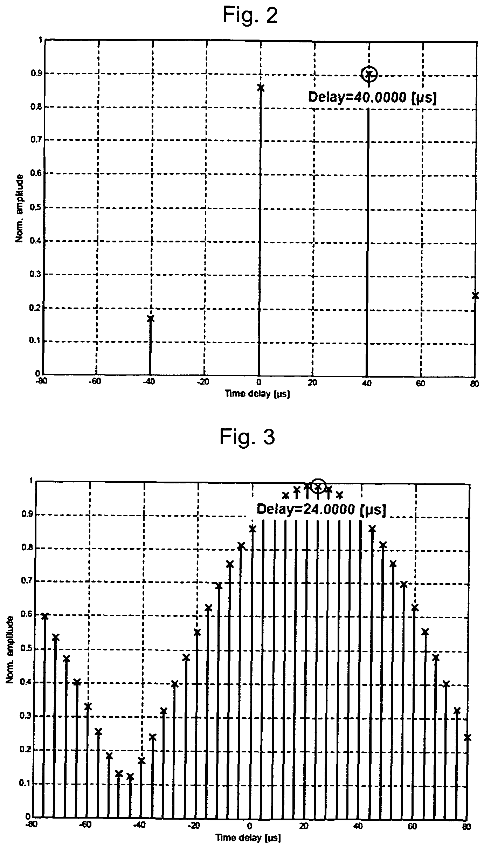

In the following the steps for obtaining the travelling time differences T needed to compute the position of the target are described in detail. Referring again to the above example 2, the travelling time differences of a signal with a bandwidth of 20 kHz arriving at the sensors are to be measured. The analog signals received at the sensors are sampled at a sampling frequency of 25 kHz (a sampling period of 40 $\mu$s) as stated above. The sampled signals of each two sensors are cross-correlated to find the maximum values of the cross-correlation functions. Fig. 2 shows an exemplary cross-correlation function for two sampled signals. As can be seen from Fig. 2, the cross-correlation function also has values every 40 $\mu$s, and the cross-correlation function has its maximum value for a time difference of the two correlated signals of 40 $\mu$s. Converting the discrete values of the cross-correlation function to corresponding distances in space leads to values of ... -12 km, 0 km, 12 km, 24 km ... and so on. In other words: the resolution of possible values of the cross-correlation function and therefore of possible target locations is very coarse. Measurement values of the target location with a resolution of 12 km in most cases are without any practical use.

The reason for this effect is the sampling raster or resolution of the sensor signals that is fixed to a small interval according to the sampling theorem and leads to the same resolution of the cross-correlation function as stated above. A glance at Fig. 2 shows that a more precise value for the maximum of the cross-correlation function can be expected in the range between 0 and 40 $\mu$s, but intermediate values are not known and cannot be calculated based on the given sampling scheme.

To overcome this problem and improve the resolution of the target position according to the objective of the invention, in a first step the sampled sensor signals are interpolated by suitable values that improve the resolution in time. In other words: smaller time differences between two (interpolated) values of the signals are obtained. Methods for interpolating bandlimited signals (for example Farrow-filters) are commonly known to persons skilled in the art and are not explained in this description. Correlating two signals with improved resolutions provides a cross-correlation function also having an improved resolution.

Fig. 3 shows the correlation result with an interpolation factor of 10 for the sampled signals of example 2. The cross-correlation function of the interpolated signals has values every 4 $\mu$s, and a maximum value of the cross-correlation function can now be found at a time delay of 24 $\mu$s. If the inaccuracy of the maximum value of the cross-correlation function in this case is estimated with about $\pm 2$ $\mu$s, this is equal to a travelling distance of the RF-wave of $\pm 600$ m. As can be seen the improvement in the resolution of the time delay is of the order of the interpolation factor.

This result suggests increasing the interpolation factors to values as big as needed for the desired resolution. However, this is not feasible; the accuracy of the results cannot be improved without limits by increasing the interpolation factors. It is to be kept in mind that the interpolated values are not the precise samples of an analog signal and that the interpolated values themselves have some uncertainty resulting from the interpolation procedure. By calculating the cross-correlation function of the interpolated signals, this uncertainty transfers to the cross-correlation function. This means that increasing the interpolation factors beyond a threshold (that may depend on the details of the problem and the processing) does not further improve the accuracy of the cross-correlation function; the only thing that increases is the computational effort.

As stated above practical values for the interpolation factors have been found empirically. Experience has shown that the algorithm of the inventors for processing narrowband signals performs best with interpolation factors of about 10. However, the invention is not limited to a specific interpolation factor of about 10. Depending on the nature of the processed signals and the problem bigger or smaller interpolation factors may be suitable.

Now back again to Fig. 3 and the resolution of the travelling distance of the RF-wave ($\pm$600 m) obtained by way of interpolating the sampled signals. Despite the improvement in accuracy in the order of the interpolation factor (a resolution of $\pm$600 m in the example of Fig. 3) there is still a need for further improving the locating precision.

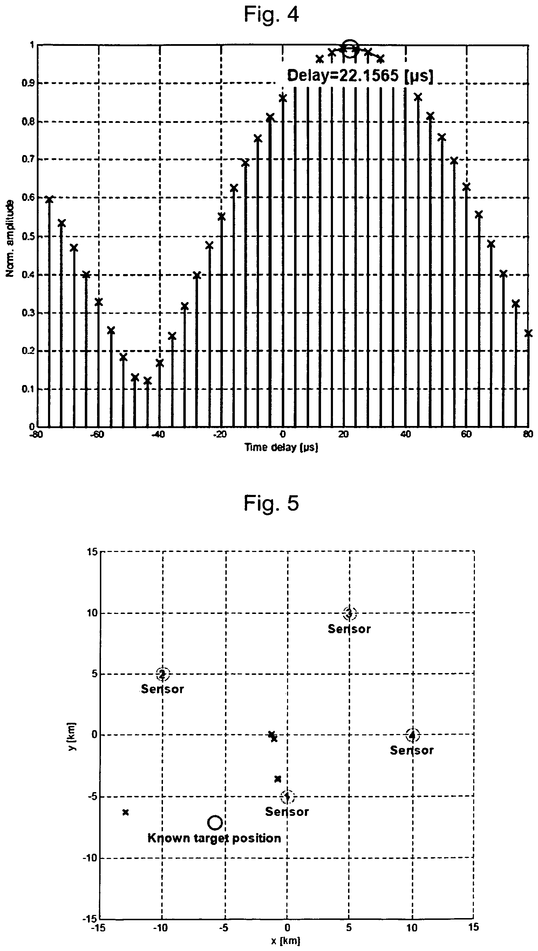

In a second step of the method of the invention, the inventors conceived a way to further improve the resolution of the cross-correlation function. Recognizing that a further improvement in accuracy by increasing the interpolation factor beyond a threshold value is not possible and that the reason for the limited resolution of the cross-correlation function is the discrete nature of the correlated signals, in other words the time difference between two discrete values in the cross-correlation function, the inventors developed a method for overcoming the limited resolution of the correlation function in these cases. To this end a continuous smooth curve, for example a second or higher order parabolic curve or a compensation spline, that spans the distances between the discrete values, is fitted to the cross-correlation function in the neighbourhood of the maximum value. In general the maximum of the continuous smooth curve fitted to the cross-correlation function does not lie on one of the discrete values of the cross-correlation function but can be found anywhere between two values. Fig. 4 shows the cross-correlation function of Fig. 3 together with a continuous smooth curve fitted to the neighbourhood of the maximum value of the cross-correlation function. Calculating the maximum of the continuous smooth curve for this example, a final value for the time difference of 22.16 $\mu$s can be obtained. Testing the method of the invention for emitters with known positions has shown that the time differences obtained in this way greatly improve the accuracy of the result, in some cases up to a range of some ten meters. An example illustrating the principles of the invention will now be shown.

To illustrate the beneficial effects, an example is given showing the improvement of the locating results according to the steps of the invention. For control purposes the precise location of the emitter is of course known in advance. Again there is used the scenario of example 2 (a signal bandwidth of 20 kHz and a sampling rate of 25 kHz), see the cross-correlation function according to Fig. 2, without interpolating the sampled time signals. In a first drawing the location results for a prior art TDOA-measurement that does not use the principles of the invention are visualized. Fig. 5 shows deviations of the measured positions of the emitter from the previously known position of the emitter for a TDOA-measurement that does not use the method of the invention. In the scenario of Fig. 5 four sensors are used. The sensor positions are marked with red (light grey) circles. A few measurement results for the emitter position obtained in some measuring cycles can be seen in Fig. 5 marked with black crosses. The precise previously known location of the emitter is marked with a blue (dark grey) circle. According to the precision of the results estimated above (see the description of example 2 above) there are differences in the range of 5 - 6 km between the measured positions and the actual position of the emitter.

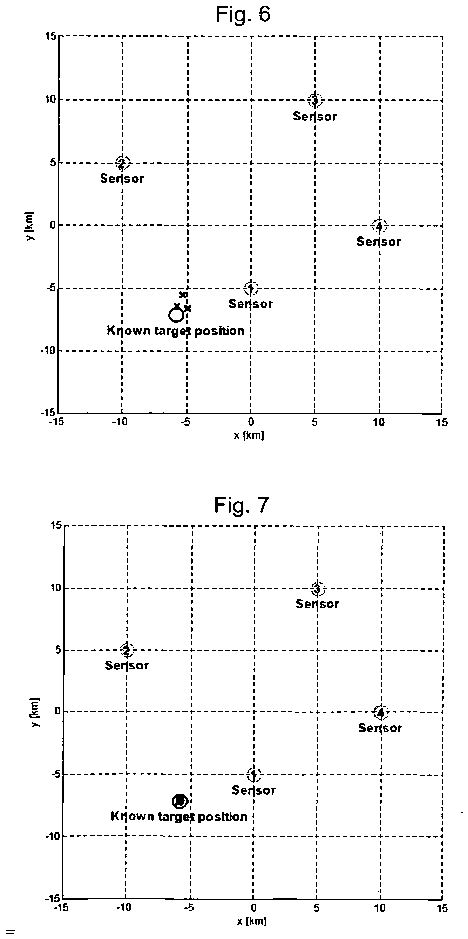

Using interpolated time signals according to the invention and the corresponding cross-correlation function according to Fig. 3 (see the description of the interpolation procedure for example 2 above) more precise results can be obtained. Like Fig. 5, Fig. 6 shows the deviations of the measured positions of an emitter from the previously known position of the emitter for some TDOA-measurements, however an interpolation of the sampled time signals is used. As can be seen from Fig. 6, the precision of the measurement results greatly improves. The differences between the measured positions and the actual position of the emitter are in the range of some hundred meters to 1 km. This result again conforms to the estimation of precision in the interpolation procedure for example 2 above.

Now according to the description of the method of the invention above a continuous smooth curve is fitted to a cross-correlation function based on interpolated values, and the maximum of the fitted curve is extracted, see again Fig. 4. The value obtained in this way is used as the final measured value of the time difference. Fig. 7 shows deviations of the measured positions of an emitter from the previously known position of the emitter for a TDOA-measurement if according to the invention the sampled time signals are interpolated and a continuous smooth curve is fitted to the cross-correlation function. As can be seen from Fig. 7, the difference of the known position and the measured positions of the emitter is so small that it can hardly be seen in the drawing. In practice this corresponds to less than 30 metres, as described above, so that the TDOA location can be successfully used even in an urban environment. For most cases this seems to be a satisfying result.

The following table shows the effect on the maximum distance error of the position calculation when calculating the time differences in the time domain without interpolation.

TABLE I

| SAMPLING RATE | TIME RESOLUTION IN THE CORRELATION PLANE | MAXIMUM ERROR IN THE SKEW DETECTION |
|---|---|---|
| 4 MHz | 0.2 $\mu$s | $\pm$ 29.9792 m |
| 2 MHz | 0.4 $\mu$s | $\pm$ 59.9585 m |
| 1 MHz | 0.8 $\mu$s | $\pm$ 119.9170 m |
| 500 kHz | 1.6 $\mu$s | $\pm$ 239.8340 m |
| 250 kHz | 3.2 $\mu$s | $\pm$ 479.6679 m |
| 125 kHz | 6.4 $\mu$s | $\pm$ 959.3359 m |
| 62.5 kHz | 12.8 $\mu$s | $\pm$ 1.9187 km |
| 31.25 kHz | 25.6 $\mu$s | $\pm$ 3.8373 km |
| 15.625 kHz | 51.2 $\mu$s | $\pm$ 7.6747 km |
| 7.8125 kHz | 102.4 $\mu$s | $\pm$ 15.3494 km |
| 3906.25 Hz | 204.8 $\mu$s | $\pm$ 30.6987 km |

The following table shows the effect on the maximum distance error of the position calculation when calculating the time differences in the time domain with an interpolation factor of 10.

TABLE II

| SAMPLING RATE | TIME RESOLUTION IN THE CORRELATION PLANE | MAXIMUM ERROR IN THE SKEW DETECTION |
|---|---|---|
| 4 MHz | 0.02 $\mu$s | $\pm$ 2.9979 m |
| 2 MHz | 0.04 $\mu$s | $\pm$ 5.9958m |
| 1 MHz | 0.08 $\mu$s | $\pm$ 11.9917 m |
| 500 kHz | 0.16 $\mu$s | $\pm$ 23.9834 m |
| 250 kHz | 0.32 $\mu$s | $\pm$ 47.9668 m |
| 125 kHz | 0.64 $\mu$s | $\pm$ 95.9336 m |
| 62.5 kHz | 0.128 $\mu$s | $\pm$ 191.8672 m |
| 31.25 kHz | 0.256 $\mu$s | $\pm$ 383.7343 m |
| 15.625 kHz | 0.512 $\mu$s | $\pm$ 767.4687 m |
| 7.8125 kHz | 1.024 $\mu$s | $\pm$ 1.5349 km |
| 3906.25 Hz | 2.048 $\mu$s | $\pm$ 3.0699 km |

The results in the Tables I and II show that a fitting step as described is needed to achieve the desired accuracy as shown in Figure 7.

EMBODIMENT 2

In a second embodiment of the invention the assumption made in the first embodiment is given up that the emitter and the receivers are stationary and that the channels on which the signal travels are undisturbed. This means that the emitter and/or the receivers may move and that there may be multipath and reflection effects by stationary or moving reflectors. As stated above the effects of movement, multipath transmissions and reflections in the transmission channels generally lead to a broader maximum in the cross-correlation function, and correctly extracting the maximum value gets increasingly difficult or is sometimes impossible.

To overcome these difficulties the inventors developed an algorithm that removes the disturbances stated above from the receiver signals. To this end the signals received at the sensors are sampled and interpolated in the same way as done in the first embodiment described above. At this point a processing step that removes the disturbances (movements, multipath transmissions, reflections) is added. This step will be described in detail in the following.

To calculate the cross-correlation functions of the signals of each two receivers according to the first embodiment, two signal segments of equal length received at the corresponding receivers are correlated. According to the second embodiment these two signal segments are divided into a number of smaller pieces of equal size (the same number of small pieces for every segment). For all small pieces now two corresponding pieces of the two signal segments are cross-correlated. The obtained cross-correlation functions of the small pieces are ordered in a sequence one behind the other and arranged in a two-dimensional plane. One dimension of this plane is the delay variable of the cross-correlation functions of the small pieces. The other dimension is the starting time variable of the small signal pieces.

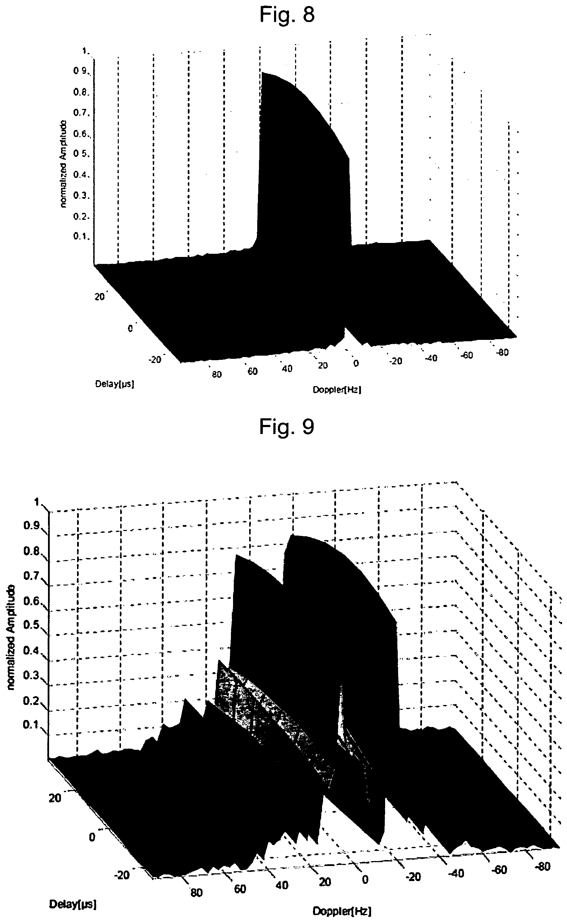

Now a one-dimensional FFT (Fast Fourier Transform) is computed in a direction orthogonal to all cross-correlation functions (in the direction of the starting time dimension) of the small pieces for every value of the delay variable. The result of the FFT-processing (absolute value) may be visualized in the form of "mountain ranges" above the two-dimensional plane (see Fig. 8 and 9 below). By way of this processing the signal portions in the FFT result coming from movement of the emitter and/or receivers and multipath transmissions and the signal portions coming from the line-of-sight transmission from the emitter to the receivers travel to different sites in the two-dimensional plane and therefore may be separated. This processing will now be illustrated by way of Fig. 8 and Fig. 9.

Fig. 8 shows the FFT result (absolute value) in the two-dimensional plane described above for the case that there is no movement in the scenario. As can be seen from the picture, the processing result is a cross-correlation function as known from the first embodiment. There are no disturbances in the neighbourhood of the cross-correlation function.

Fig. 9 shows the FFT result (absolute value) in the two-dimensional plane described above for the general case, will say the case that there are movements (of the emitter and/or receivers), reflections (stationary or moving reflectors) or multipath in the scenario. As can be seen from the drawing, the non-ideal disturbing effects influencing the scenario lead to a number of peak lines ("mountain ranges") with different magnitudes in the result. Assuming that the disturbances are weaker than the line-of-sight signal, in other words that the strongest peak line is caused by the line-of-sight transmission from the emitter to the receivers, all peak lines with a smaller magnitude may be cancelled and the undisturbed cross-correlation function of the line-of-sight channel may be separated and used for further processing steps. In this way disturbances in real world scenarios may be overcome and excellent results (cross-correlation functions) for further processing are generated according to the second embodiment of the invention. The further processing according to the second embodiment uses the cleaned-up cross-correlation function according to the above description and does not differ from the first embodiment; it is therefore not described again.

EMBODIMENT 3

It will be appreciated by a reader skilled in the art that apparatus for measuring the travelling time differences of a band limited signal that is transmitted from one emitter that may be a stationary or moving emitter can be provided. The principal parts of the apparatus may comprise, but is not limited to, the elements described below.

The receivers may each comprise a broadband radio frequency receiver with an antenna suitable for TDOA detection, amplifiers, down converters and filters to ensure that the signal from the target is received and amplified with sufficient fidelity as known by those skilled in the art. Such components of the radio frequency receiver should be designed to operate at the centre-frequency of interest, and with a suitable bandwidth, and together form a radio receiver signal chain. In some implementations, the centre frequency of interest may be tuneable, to allow the receivers to scan across a range of frequencies.

The receivers may additionally comprise means for sampling the signal which is output from the radio receiver signal chain as is well known to those skilled in the art, such as using an analogue to digital converted (ADC) and associated circuitry. The ADC must be capable of sampling the signal at least the sampling rate demanded by the method as described previously.

The receivers may additionally comprise circuitry to allow the method described above to be performed. It will be appreciated by the reader that the steps such as but not limited to correlation, movement effect removal, and maximum value extraction mentioned in the method can be performed digitally by a wide range of processing circuitry, and/or by a computer.

In one exemplary apparatus, there may be provided a processing system which comprises at least memory elements, a processor, and a communications bus allowing the other elements to communicate. The communications bus may be connected to the ADC. The samples from the ADC may be stored in the memory. The processor may be configured by suitable machine-readable code to be caused to access the samples stored in the memory, and to perform the mathematical operations of correlating segments of the sampled signals, and extract the maximum values of the cross-correlation functions that represent the travelling time differences of the corresponding signals.

In another exemplary apparatus, there may be provided alternative processing circuitry according to the method, such as but not limited to a Field Programmable Gate Array (FPGA), a Digital Signal Processor (DSP), or a microprocessor.

It will be appreciated by the reader that the method described above demands combination of individual travelling time differences from the different receivers to enable the suitable cross-correlations to be made. The receivers may therefore comprise data link apparatus according to methods well known to those skilled in the art, allowing each receiver to communicate data (including travelling time data) to each other receiver. The communication between receivers may be performed by a separate radio data link, for example. Alternatively, the communication of travelling time data between receivers may be performed by a wired communication system. Alternatively, each receiver could transmit the information required to a central server for processing according to the method.

It will be appreciated by the reader that the apparatus may also comprise a network receivers adapted to perform the functions of the method. The individual receivers in the network may communicate using radio or wired communication means, for example.

It will be appreciated by the reader that the processing steps which realize the improved TDOA processing algorithm presented above need not be performed at the two receivers for an accurate TDOA estimate to be found. Following the step of sampling the radio signals received respectively at each receiver, the sampled signals may be digitized, stored, optionally compressed, and then transmitted to a central processing station using techniques well known to the person skilled in the art, via internet. In this case, the step of correlating the signal segments and the step of extracting the maximum values of the cross-correlation functions is performed remotely from the at least two receivers. This technique may advantageously allow power to be saved at the receivers, thus preserving receiver battery consumption and reducing the complexity of operating the receivers.

It will also be appreciated by the reader that the receivers may have provided an accurate timing reference, which could also optionally be derived from the timing signals transmitted by GPS satellites. The receiver therefore contain means for receiving signals from GPS satellites.

**Claims**

1. A method for measuring the travelling time differences of a narrowband signal in a bandwidth range below 30 kHz that is transmitted from one stationary emitter over at least two channels having different time delays to at least two stationary receivers, the method comprising the steps of
sampling the signals arriving at the at least two receivers;
correlating segments of the sampled signals of each two receivers to obtain the cross-correlation functions of each two signals; and
extracting the maximum values of the cross-correlation functions that represent the travelling time differences of the corresponding signals; **characterized in that**
the step of sampling the signals arriving at the at least two receivers comprises a first step of sampling the signals according to the sampling theorem, and a second step of interpolating the sampled values of the first step by a number of interpolation values; and
the step of correlating segments of the sampled signals of each two receivers comprises correlating segments of the signals interpolated by the number of interpolation values; and
the step of extracting the maximum values of the cross-correlation functions comprises a first step of fitting continuous smooth curves to the maximum values and two or more neighbouring values of the cross-correlation functions, the continuous smooth curves spanning the distances between these values, and a second step of calculating the maximums of the continuous smooth curves and taking these maximums as the maximum values of the cross-correlation functions.

2. A method according to claim 1 wherein the interpolation of the time dependent signals received at the receivers is done using a Farrow filter.

3. A method according to claim 1 wherein the continuous smooth curve is a parabolic curve.

4. A method for measuring the travelling time differences of a narrowband signal in a bandwidth range below 30 kHz that is transmitted from one emitter that may be a moving emitter over at least two channels having different delays, the channels being disturbed by multipath transmissions and reflections from stationary or moving reflectors, to at least two receivers that may be moving receivers, the method comprising the steps of:

sampling the signals arriving at the at least two receivers;

correlating segments of the sampled signals of each two receivers to obtain the cross-correlation functions of each two signals;

removing the effects of movements and disturbed channels from the cross-correlation functions; and

extracting the maximum values of the cross-correlation functions that represent the travelling time differences of the corresponding signals; **characterised in that**:

the step of sampling the signals arriving at the at least two receivers comprises:

a first step of sampling the signals according to the sampling theorem, and

a second step of interpolating the sampled values of the first step by a number of interpolation values;

the step of correlating segments of the sampled signals of each two receivers comprises:

a first step of dividing the sampled and interpolated segments of signals of each two receivers into the same number of smaller pieces of equal size,

a second step of correlating corresponding small pieces to obtain cross-correlation functions of each two corresponding signal pieces,

a third step of ordering the cross-correlation functions of the corresponding pieces in a sequence one behind the other in a two-dimensional plane, and

a fourth step of computing a one-dimensional FFT in the ordering direction of the cross-correlation functions for every value of the cross-correlation functions in the two-dimensional plane;

the step of removing the effects of movements and disturbed channels from the cross-correlation functions comprises a step of selecting the peak line with the strongest magnitude from the FFT in the two-dimensional plane and using this peak line as a cross-correlation function for further processing; and

the step of extracting the maximum values of the cross-correlation functions comprises:

a first step of fitting continuous smooth curves to the maximum values and two or more neighbouring values of the cross-correlation functions, the continuous smooth curves spanning the distances between these values, and

a second step of calculating the maximums of the continuous smooth curves and taking these maximums as the maximum values of the cross-correlation functions.

5.  A method as claimed in any one of claims 1 to 4, wherein at least the step of correlating the signal segments and the step of extracting the maximum values of the cross-correlation functions is performed remotely from the at least two receivers.

6.  A method as claimed in claims 1 to 4, wherein the step of sampling the signals includes synchronizing the signal samples with a GPS-derived timing reference.

7.  An apparatus for measuring the travelling time differences of a narrowband signal in a bandwidth range below 30 kHz that is transmitted from one stationary emitter over at least two channels having different delays to at least two stationary receivers, the apparatus comprising:

means configured to sample the signals arriving at the at least two receivers;

means configured to correlate segments of the sampled signals of each two receivers to obtain the cross-correlation functions of each two signals; and

means configured to extract the maximum values of the cross-correlation functions that represent the travelling time differences of the corresponding signals;

**characterized in that**:

the means configured to sample the signals arriving at the at least two receivers is further configured to sample the signals according to the sampling theorem and to interpolate the sampled values by a number of interpolation values;

the means configured to correlate segments of the sampled signals of each two receivers is further configured to correlated the segments of signals interpolated by the number of interpolation values to obtain cross-correlation functions;

the means configured to extract the maximum values of the cross-correlation functions is further configured to fit continuous smooth curves to the maximum values and two or more neighbouring values of the cross-correlation functions, the continuous smooth curves spanning the distances between these values, and to calculate the maximums of the continuous smooth curves and to take these maximums as the maximum values of the cross-correlation functions.

8. An apparatus for measuring the travelling time differences of a narrowband signal in a bandwidth range below 30 kHz that is transmitted from one emitter that may be a moving emitter over at least two channels having different delays, the channels being disturbed by multipath transmissions and reflections from stationary or moving reflectors, to at least two receivers that may be moving receivers, the apparatus comprising:

means configured to sample the signals arriving at the at least two receivers;
means configured to correlate segments of the sampled signals of each two receivers to obtain the cross-correlation functions of each two signals;
means configured to remove the effects of movements and disturbed channels from the cross-correlation functions; and
means configured to extract the maximum values of the cross-correlation functions that represent the travelling time differences of the corresponding signals;

**characterized in that**:

the means configured to sample the signals arriving at the at least two receivers is further configured to sample the signals according to the sampling theorem and to interpolate the sampled values by a number of interpolation values;
the means configured to correlate segments of the sampled signals of each two receivers is further configured to divide the sampled and interpolated segments of signals of each two receivers into the same number of smaller pieces of equal size, to correlate corresponding small pieces to obtain cross-correlation functions of each two corresponding signal pieces, to order the cross-correlation functions of the corresponding pieces in a sequence one behind the other in a two-dimensional plane, and to compute a one-dimensional FFT in the ordering direction of the cross-correlation functions for every value of the cross-correlation functions in the two-dimensional plane;
the means configured to remove the effects of movements and disturbed channels from the cross-correlation functions is further configured to select the peak line with the strongest magnitude from the FFTs in the two-dimensional plane and to use this peak line as a cross-correlation function for further processing; and
the means configured to extract the maximum values of the cross-correlation functions is further configured to fit continuous smooth curves to the maximum values and two or more neighbouring values of the cross-correlation functions, the continuous smooth curves spanning the distances between these values, and to calculate the maximums of the continuous smooth curves and to take these maximums as the maximum values of the cross-correlation functions.

9. An apparatus as claimed in claims 7 or 8, in which means configured to correlate the signal segments and means configured to extract the maximum values of the cross-correlation functions from the at least two receivers are located remotely from the two receivers.

10. An apparatus as claimed in claims 7 to 9 which additionally includes means configured to synchronize the signal samples with a GPS-derived timing reference.

**Patentansprüche**

1. Verfahren zum Messen der Laufzeitdifferenzen eines Schmalbandsignals in einem Bandbreitenbereich unter 30 kHz, das von einem stationären Emitter über mindestens zwei Kanäle mit unterschiedlichen Zeitverzögerungen an mindestens zwei stationäre Empfänger übertragen wird, wobei das Verfahren die Schritte umfasst:

das Abtasten der Signale, die an den mindestens zwei Empfängern ankommen;
das Korrelieren von Segmenten der abgetasteten Signale von je zwei Empfängern, damit man die Kreuzkorrelationsfunktionen von je zwei Signalen erhält; und

das Entnehmen der Maximalwerte der Kreuzkorrelationsfunktionen, die die Laufzeitdifferenzen der zugehörigen Signale darstellen; **dadurch gekennzeichnet, dass**

der Schritt des Abtastens der Signale, die an den mindestens zwei Empfängern ankommen, einen ersten Schritt umfasst, in dem die Signale gemäß dem Abtasttheorem abgetastet werden, und einen zweiten Schritt, in dem die abgetasteten Werte aus dem ersten Schritt durch eine Anzahl Interpolationswerte interpoliert werden; und der Schritt des Korrelierens von Segmenten der abgetasteten Signale von je zwei Empfängern das Korrelieren von Segmenten der Signale umfasst, die durch die Anzahl Interpolationswerte interpoliert wurden; und der Schritt des Entnehmens der Maximalwerte der Kreuzkorrelationsfunktionen einen ersten Schritt umfasst, in dem kontinuierliche glatte Kurven durch die Maximalwerte und zwei oder mehr benachbarte Werte der Kreuzkorrelationsfunktionen gelegt werden, wobei die kontinuierlichen glatten Kurven die Abstände zwischen diesen Werten überbrücken, und einen zweiten Schritt, in dem die Maxima der kontinuierlichen glatten Kurven berechnet werden und diese Maxima als Maximalwerte der Kreuzkorrelationsfunktionen genommen werden.

2. Verfahren nach Anspruch 1, wobei die Interpolation der zeitabhängigen Signale, die an den Empfängern empfangen werden, mit Hilfe eines Farrow-Filters erfolgt.

3. Verfahren nach Anspruch 1, wobei die kontinuierliche glatte Kurve eine parabolische Kurve ist.

4. Verfahren zum Messen der Laufzeitdifferenzen eines Schmalbandsignals in einem Bandbreitenbereich unter 30 kHz, das von einem Emitter übertragen wird, der ein sich bewegender Emitter sein kann, und zwar über mindestens zwei Kanäle mit unterschiedlichen Zeitverzögerungen, wobei die Kanäle durch Mehrwegübertragungen und Reflexionen von stationären oder bewegten Reflektoren gestört sind, an mindestens zwei Empfänger, bei denen es sich um bewegte Empfänger handeln kann, und das Verfahren die Schritte umfasst:

das Abtasten der Signale, die an den mindestens zwei Empfängern ankommen; das Korrelieren von Segmenten der abgetasteten Signale von je zwei Empfängern, damit man die Kreuzkorrelationsfunktionen von je zwei Signalen erhält; das Entfernen der Effekte der Bewegungen und gestörten Kanäle aus den Kreuzkorrelationsfunktionen; und das Entnehmen der Maximalwerte der Kreuzkorrelationsfunktionen, die die Laufzeitdifferenzen der zugehörigen Signale darstellen;

wobei

der Schritt des Abtastens der Signale, die an den mindestens zwei Empfängern ankommen, umfasst:

einen ersten Schritt, in dem die Signale gemäß dem Abtasttheorem abgetastet werden, und einen zweiten Schritt, in dem die abgetasteten Werte aus dem ersten Schritt durch eine Anzahl Interpolationswerte interpoliert werden;

der Schritt des Korrelierens von Segmenten der abgetasteten Signale von je zwei Empfängern umfasst:

einen ersten Schritt, in dem die abgetasteten und interpolierten Segmente eines Signals von jedem der beiden Empfänger in eine gleiche Anzahl kleinerer Stücke von gleicher Größe unterteilt werden, einen zweiten Schritt, in dem zugehörige kleine Stücke korreliert werden, damit man Kreuzkorrelationsfunktionen von je zwei zugehörigen Signalstücken erhält, einen dritten Schritt des Anordnens der Kreuzkorrelationsfunktionen der zugehörigen Stücke in einer Folge eine hinter der anderen in einer zweidimensionalen Ebene, und einen vierten Schritt, in dem eine eindimensionale FFT in der Anordnungsrichtung der Kreuzkorrelationsfunktionen für jeden Wert der Kreuzkorrelationsfunktionen in der zweidimensionalen Ebene berechnet wird;

der Schritt des Entfernens der Effekte der Bewegungen und gestörten Kanäle aus den Kreuzkorrelationsfunktionen einen Schritt des Wählens der Spitzenwertlinie mit der größten Stärke aus der FFT in der zweidimensionalen Ebene und das Verwenden dieser Spitzenwertlinie als Kreuzkorrelationsfunktion für die weitere Verarbeitung umfasst; und der Schritt des Entnehmens der Maximalwerte der Kreuzkorrelationsfunktionen umfasst:

einen ersten Schritt, in dem kontinuierliche glatte Kurven durch die Maximalwerte und zwei oder mehr benachbarte Werte der Kreuzkorrelationsfunktionen gelegt werden, wobei die kontinuierlichen glatten Kurven die Abstände zwischen diesen Werten überbrücken, und
einen zweiten Schritt, in dem die Maxima der kontinuierlichen glatten Kurven berechnet werden und diese Maxima als Maximalwerte der Kreuzkorrelationsfunktionen genommen werden.

5. Verfahren nach irgendeinem der Ansprüche 1 bis 4, wobei zumindest der Schritt des Korrelierens der Signalsegmente und der Schritt des Entnehmens der Maximalwerte der Kreuzkorrelationsfunktionen entfernt von den mindestens zwei Empfängern vorgenommen wird.

6. Verfahren nach Anspruch 1 bis 4, wobei der Schritt des Abtastens der Signale das Synchronisieren der Signalabtastwerte mit einer auf GPS beruhenden Zeitreferenz enthält.

7. Vorrichtung zum Messen der Laufzeitdifferenzen eines Schmalbandsignals in einem Bandbreitenbereich unter 30 kHz, das von einem stationären Emitter über mindestens zwei Kanäle mit unterschiedlichen Zeitverzögerungen an mindestens zwei stationäre Empfänger übertragen wird, wobei die Vorrichtung umfasst:

Mittel, die dafür ausgelegt sind, die Signale abzutasten, die an dem mindestens zwei Empfängern ankommen;
Mittel, die dafür ausgelegt sind, Segmente der abgetasteten Signale von je zwei Empfängern zu korrelieren, damit man die Kreuzkorrelationsfunktionen von je zwei Signalen erhält; und
Mittel, die dafür ausgelegt sind, die Maximalwerte der Kreuzkorrelationsfunktionen zu entnehmen, die die Laufzeitdifferenzen der zugehörigen Signale darstellen;

**dadurch gekennzeichnet, dass**:

die Mittel, die dafür ausgelegt sind, die Signale abzutasten, die an den mindestens zwei Empfängern ankommen, die Signale gemäß dem Abtasttheorem abtasten, und die abgetasteten Werte durch eine Anzahl Interpolationswerte interpolieren;
die Mittel, die dafür ausgelegt sind, die Segmente der abgetasteten Signale von je zwei Empfängern zu korrelieren die Segmente der Signale korrelieren, die durch die Anzahl Interpolationswerte interpoliert wurden, damit man Kreuzkorrelationsfunktionen erhält;
die Mittel, die dafür ausgelegt sind, die Maximalwerte der Kreuzkorrelationsfunktionen zu entnehmen, kontinuierliche glatte Kurven durch die Maximalwerte und zwei oder mehr benachbarte Werte der Kreuzkorrelationsfunktionen legen, wobei die kontinuierlichen glatten Kurven die Abstände zwischen diesen Werten überbrücken, und die Maxima der kontinuierlichen glatten Kurven berechnen und diese Maxima als Maximalwerte der Kreuzkorrelationsfunktionen nehmen.

8. Vorrichtung zum Messen der Laufzeitdifferenzen eines Schmalbandsignals in einem Bandbreitenbereich unter 30 kHz, das von einem Emitter übertragen wird, der ein sich bewegender Emitter sein kann, und zwar über mindestens zwei Kanäle mit unterschiedlichen Zeitverzögerungen, wobei die Kanäle durch Mehrwegübertragungen und Reflexionen von stationären oder bewegten Reflektoren gestört sind, an mindestens zwei Empfänger, bei denen es sich um bewegte Empfänger handeln kann, und die Vorrichtung umfasst:

Mittel, die dafür ausgelegt sind, die Signale abzutasten, die an dem mindestens zwei Empfängern ankommen;
Mittel, die dafür ausgelegt sind, Segmente der abgetasteten Signale von je zwei Empfängern zu korrelieren, damit man die Kreuzkorrelationsfunktionen von je zwei Signalen erhält;
Mittel, die dafür ausgelegt sind, die Effekte der Bewegungen und gestörten Kanäle aus den Kreuzkorrelationsfunktionen zu entfernen; und
Mittel, die dafür ausgelegt sind, die Maximalwerte der Kreuzkorrelationsfunktionen zu entnehmen, die die Laufzeitdifferenzen der zugehörigen Signale darstellen;

**dadurch gekennzeichnet, dass**:

die Mittel, die dafür ausgelegt sind, die Signale abzutasten, die an dem mindestens zwei Empfängern ankommen, die Signale gemäß dem Abtasttheorem abtasten und die abgetasteten Werte durch eine Anzahl Interpolationswerte interpolieren;
die Mittel, die dafür ausgelegt sind, Segmente der abgetasteten Signale von je zwei Empfängern zu korrelieren, die abgetasteten und interpolierten Segmente der Signale von jedem der beiden Empfänger in eine gleiche Anzahl kleinerer Stücke von gleicher Größe unterteilen,
die zugehörigen kleineren Stücke korrelieren, damit man Kreuzkorrelationsfunktionen von je zwei zugehörigen Signalstücken erhält,

die Kreuzkorrelationsfunktionen der zugehörigen Stücke in einer Folge eine hinter der anderen in einer zweidimensionalen Ebene anordnen, und

eine eindimensionale FFT in der Anordnungsrichtung der Kreuzkorrelationsfunktionen für jeden Wert der Kreuzkorrelationsfunktionen in der zweidimensionalen Ebene berechnen;

die Mittel, die dafür ausgelegt sind, die Effekte der Bewegungen und gestörten Kanäle aus den Kreuzkorrelationsfunktionen zu entfernen, die Spitzenwertlinie mit der größten Stärke aus der FFT in der zweidimensionalen Ebene auswählen und diese Spitzenwertlinie als Kreuzkorrelationsfunktion für die weitere Verarbeitung verwenden; und

die Mittel, die dafür ausgelegt sind, die Maximalwerte der Kreuzkorrelationsfunktionen zu entnehmen, kontinuierliche glatte Kurven durch die Maximalwerte und zwei oder mehr benachbarte Werte der Kreuzkorrelationsfunktionen legen, wobei die kontinuierlichen glatten Kurven die Abstände zwischen diesen Werten überbrücken, und die Maxima der kontinuierlichen glatten Kurven berechnen und diese Maxima als Maximalwerte der Kreuzkorrelationsfunktionen nehmen.

9. Vorrichtung nach Anspruch 7 oder 8, wobei die Mittel, die dafür ausgelegt sind, die Signalsegmente zu korrelieren, und die Mittel, die dafür ausgelegt sind, die Maximalwerte der Kreuzkorrelationsfunktionen von den mindestens zwei Empfängern zu entnehmen, entfernt von den zwei Empfängern angeordnet sind.

10. Vorrichtung nach Anspruch 7 bis 9, die zusätzlich Mittel zum Synchronisieren der Signalabtastwerte mit einer auf GPS beruhenden Zeitreferenz enthält.

**Revendications**

1. Procédé de mesure des différences de temps de déplacement d'un signal de bande étroite dans une plage de largeur de bande inférieure à 30 kHz qui est transmis depuis un émetteur immobile sur au moins deux canaux présentant différents retards de temps à destination d'au moins deux récepteurs immobiles, le procédé comprenant les étapes de :

l'échantillonnage des signaux arrivant aux au moins deux récepteurs ;

la corrélation de segments des signaux échantillonnés de chaque deux récepteurs pour obtenir les fonctions de corrélation croisée de chaque deux signaux ; et

l'extraction des valeurs maximales des fonctions de corrélation croisée représentant les différences de temps de déplacement des signaux correspondants ; **caractérisé en ce que**

l'étape de l'échantillonnage des signaux arrivant aux au moins deux récepteurs comprend une première étape d'échantillonnage des signaux selon le théorème d'échantillonnage, et une deuxième étape d'interpolation des valeurs échantillonnées de la première étape par un nombre de valeurs d'interpolation ; et

l'étape de la corrélation de segments des signaux échantillonnés de chaque deux récepteurs comprend la corrélation de segments des signaux interpolés par le nombre de valeurs d'interpolation ; et

l'étape de l'extraction des valeurs maximales des fonctions de corrélation croisée comprend une première étape d'ajustement de courbes lisses continues aux valeurs maximales et à au moins deux valeurs voisines des fonctions de corrélation croisée, les courbes lisses continues couvrant les distances entre ces valeurs, et une deuxième étape de calcul des maximaux des courbes lisses continues et de prise de ces maximaux en tant que valeurs maximales des fonctions de corrélation croisée.

2. Procédé selon la revendication 1, dans lequel l'interpolation des signaux dépendant du temps reçus aux récepteurs est effectuée en utilisant un filtre de Farrow.

3. Procédé selon la revendication 1, dans lequel la courbe lisse continue est une courbe parabolique.

4. Procédé de mesure des différences de temps de déplacement d'un signal de bande étroite dans une plage de largeur de bande inférieure à 30 kHz qui est transmis depuis un émetteur qui peut être un émetteur mobile sur au moins deux canaux présentant des retards différents, les canaux étant perturbés par des transmissions multivoies et des réflexions de réflecteurs immobiles ou mobiles, à destination d'au moins deux récepteurs pouvant être des récepteurs mobiles, le procédé comprenant les étapes de :

l'échantillonnage des signaux arrivant aux au moins deux récepteurs ;

la corrélation de segments des signaux échantillonnés de chaque deux récepteurs pour obtenir les fonctions de corrélation croisée de chaque deux signaux ;
la suppression des effets de mouvements et de canaux perturbés des fonctions de corrélation croisée ; et
l'extraction des valeurs maximales des fonctions de corrélation croisée représentant les différences de temps de déplacement des signaux correspondants ;

dans lequel :

l'étape de l'échantillonnage des signaux arrivant aux au moins deux récepteurs comprend :

une première étape d'échantillonnage des signaux selon le théorème d'échantillonnage, et
une deuxième étape d'interpolation des valeurs échantillonnées de la première étape par un nombre de valeurs d'interpolation ;

l'étape de la corrélation des segments des signaux échantillonnés de chaque deux récepteurs comprend :

une première étape de division des segments échantillonnés et interpolés de signaux de chaque deux récepteurs dans le même nombre de morceaux plus petits de taille égale,
une deuxième étape de corrélation de petits morceaux correspondants pour obtenir des fonctions de corrélation croisée de chaque deux morceaux de signal correspondants,
une troisième étape de classement des fonctions de corrélation croisée des morceaux correspondants dans une séquence l'une derrière l'autre dans un plan bidimensionnel, et
une quatrième étape de calcul d'une transformée rapide de Fourier, FFT, unidimensionnelle dans le sens de classement des fonctions de corrélation croisée pour chaque valeur des fonctions de corrélation croisée dans le plan bidimensionnel ;

l'étape de la suppression des effets de mouvements et de canaux perturbés des fonctions de corrélation croisée comprend une étape de sélection de la ligne de crête avec la grandeur la plus élevée à partir de la FFT dans le plan bidimensionnel et l'utilisation de cette ligne de crête en tant que fonction de corrélation croisée pour un traitement supplémentaire ; et
l'étape de l'extraction des valeurs maximales des fonctions de corrélation croisée comprend :

une première étape d'ajustement de courbes lisses continues aux valeurs maximales et à au moins deux valeurs voisines des fonctions de corrélation croisée, les courbes lisses continues couvrant les distances entre ces valeurs, et
une deuxième étape de calcul des maximaux des courbes lisses continues et la prise de ces maximaux en tant que valeurs maximales des fonctions de corrélation croisée.

5. Procédé selon l'une quelconque des revendications 1 à 4, dans lequel au moins l'étape de la corrélation des segments de signal et l'étape de l'extraction des valeurs maximales des fonctions de corrélation croisée sont effectuées à distance depuis les au moins deux récepteurs.

6. Procédé selon l'une quelconque des revendications 1 à 4, dans lequel l'étape de l'échantillonnage des signaux comprend la synchronisation des échantillons de signal avec une référence de timing dérivée par GPS.

7. Appareil de mesure des différences de temps de déplacement d'un signal de bande étroite dans une plage de largeur de bande inférieure à 30 kHz qui est transmis depuis un émetteur immobile sur au moins deux canaux présentant différents retards à destination d'au moins deux récepteurs immobiles, l'appareil comprenant :

des moyens configurés pour effectuer l'échantillonnage des signaux arrivant aux au moins deux récepteurs ;
des moyens configurés pour effectuer la corrélation de segments des signaux échantillonnés de chaque deux récepteurs pour obtenir les fonctions de corrélation croisée de chaque deux signaux ; et
des moyens configurés pour effectuer l'extraction des valeurs maximales des fonctions de corrélation croisée représentant les différences de temps de déplacement des signaux correspondants ;

caractérisé en ce que :

les moyens configurés pour effectuer l'échantillonnage des signaux arrivant aux au moins deux récepteurs effectuent l'échantillonnage des signaux selon le théorème d'échantillonnage et l'interpolation des valeurs échantillonnées par un nombre de valeurs d'interpolation ;

les moyens configurés pour effectuer la corrélation de segments des signaux échantillonnés de chaque deux récepteurs effectuent la corrélation des segments de signaux interpolés par le nombre de valeurs d'interpolation pour obtenir des fonctions de corrélation croisée ;

les moyens configurés pour effectuer l'extraction des valeurs maximales des fonctions de corrélation croisée effectuent l'ajustement de courbes lisses continues aux valeurs maximales et à au moins deux valeurs voisines des fonctions de corrélation croisée, les courbes lisses continues couvrant les distances entre ces valeurs, ainsi que le calcul des maximaux des courbes lisses continues et la prise de ces maximaux en tant que valeurs maximales des fonctions de corrélation croisée.

8. Appareil de mesure des différences de temps de déplacement d'un signal de bande étroite dans une plage de largeur de bande inférieure à 30 kHz qui est transmis depuis un émetteur qui peut être un émetteur mobile sur au moins deux canaux présentant des retards différents, les canaux étant perturbés par des transmissions multivoies et des réflexions de réflecteurs immobiles ou mobiles, à destination d'au moins deux récepteurs pouvant être des récepteurs mobiles, l'appareil comprenant :

des moyens configurés pour effectuer l'échantillonnage des signaux arrivant aux au moins deux récepteurs ;

des moyens configurés pour effectuer la corrélation de segments des signaux échantillonnés de chaque deux récepteurs pour obtenir les fonctions de corrélation croisée de chaque deux signaux ;

des moyens configurés pour effectuer la suppression des effets de mouvements et de canaux perturbés des fonctions de corrélation croisée ; et

des moyens configurés pour effectuer l'extraction des valeurs maximales des fonctions de corrélation croisée représentant les différences de temps de déplacement des signaux correspondants ;

**caractérisé en ce que**

les moyens configurés pour effectuer l'échantillonnage des signaux arrivant aux au moins deux récepteurs effectuent l'échantillonnage des signaux selon le théorème d'échantillonnage et l'interpolation des valeurs échantillonnées par un nombre de valeurs d'interpolation ;

les moyens configurés pour effectuer la corrélation des segments des signaux échantillonnés de chaque deux récepteurs effectuent :

la division des segments échantillonnés et interpolés de signaux de chaque deux récepteurs dans le même nombre de morceaux plus petits de taille égale,

la corrélation de petits morceaux correspondants pour obtenir des fonctions de corrélation croisée de chaque deux morceaux de signal correspondants,

le classement des fonctions de corrélation croisée des morceaux correspondants dans une séquence l'une derrière l'autre dans un plan bidimensionnel, et

le calcul d'une transformée rapide de Fourier, FFT, unidimensionnelle dans le sens de classement des fonctions de corrélation croisée pour chaque valeur des fonctions de corrélation croisée dans le plan bidimensionnel ;

les moyens configurés pour effectuer la suppression des effets de mouvements et de canaux perturbés des fonctions de corrélation croisée effectuent la sélection de la ligne de crête avec la grandeur la plus élevée à partir des FFT dans le plan bidimensionnel et l'utilisation de cette ligne de crête en tant que fonction de corrélation croisée pour un traitement supplémentaire ; et

les moyens configurés pour effectuer l'extraction des valeurs maximales des fonctions de corrélation croisée effectuent l'ajustement de courbes lisses continues aux valeurs maximales et à au moins deux valeurs voisines des fonctions de corrélation croisée, les courbes lisses continues couvrant les distances entre ces valeurs, ainsi que le calcul des maximaux des courbes lisses continues et la prise de ces maximaux en tant que valeurs maximales des fonctions de corrélation croisée.

9. Appareil selon la revendication 7 ou 8, dans lequel les moyens configurés pour effectuer la corrélation des segments de signal et les moyens configurés pour effectuer l'extraction des valeurs maximales des fonctions de corrélation croisée depuis les au moins deux récepteurs sont situés à distance des au moins deux récepteurs.

10. Appareil selon l'une quelconque des revendications 7 à 9, comprenant en outre des moyens configurés pour effectuer la synchronisation des échantillons de signal avec une référence de timing dérivée par GPS.

## Fig. 1

## Fig. 2

## Fig. 3

## Fig. 4

## Fig. 5

## Fig. 6

## Fig. 7

## Fig. 8

## Fig. 9

**EP 2 642 311 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6388618 B, Stilp
- US 5512908 A
- US 5327144 A
- US 2008089393 A1
- US 2008167051 A1